# EUROPEAN PATENT SPECIFICATION

(11) **EP 2 233 236 B1**
(45) Date of publication and mention of the grant of the patent: **11.05.2016**
(21) Application number: 10157350.9
(22) Date of filing: 23.03.2010
(51) Int. Cl.: B23D 47/04, B27B 5/065

(54) **Method and machine for cutting wood panels or the like**
Verfahren and Maschine zum Schneiden von Holzplatten oder degleichen
Procédé et machine pour couper des panneaux en bois ou similaires

(30) Priority: 23.03.2009 IT BO20090168
(43) Date of publication of application: 29.09.2010
(73) Proprietor: BIESSE S.p.A., Pesaro (IT)
(72) Inventor: Lattanzi, Lorenzo, 61100 Pesaro (IT)
(74) Representative: Bergadano, Mirko

(56) References cited:
- WO-A-03/078097
- WO-A1-2008/038133
- DE-A1- 19 527 727
- US-A- 2 758 616
- US-A- 4 220 492
- US-A- 4 248 656

## Description

The present invention relates to a method for cutting wood panels or the like according to the preamble of claim 1. Such a method is known from WO 2008/038133A.

In the wood panel machining field it is known to provide a cutting machine comprising a base defining a substantially horizontal resting plane for at least one wood panel or the like; a feeding device for feeding the panel along the resting plane and through the cutting station; a pressure device movable between a lowered clamping position of the panel at the cutting station and a lifted releasing position; and a cutting device which is transversally movable with respect to a panel feeding direction to separate at least one component from the panel itself.

The pressure device is moved between its lowered clamping position and its lifted releasing position by means of a driving device, normally comprising two pneumatic-type driving cylinders mounted on opposite sides of the base.

Because the mentioned driving cylinders do not allow to accurately control the clamping pressure exerted by the pressure device on the panel and the lowered clamping position of the pressure device itself, the known cutting machines of the above-described type have some drawbacks mainly deriving from that the pressure device may damage the panels, in particular if they are made of relatively brittle, delicate materials.

Document US-A-2758616 relates to a machine for edge trimming, sizing and squaring flat panels comprising a hopper for a stack of superimposed panels, a carriage for extracting the lowermost panel from the stack and advancing this panel through a cutting station where the lateral edges of the panel are trimmed by two rotatively driven cutting tools.

The carriage is provided with a pressure plate fitted to a lever arm provided with two rollers. The rollers cooperate with track and shifting members to hold the pressure plate down on the panel while the cut is made and to hold the pressure plate elevated above the path of the panels when the carriage moves towards the hopper.

The lever arm is further provided with two tension springs, which exert a lift on the pressure plate thus preventing the pressure plate from dropping down on the panels.

It is an object of the present invention to provide a method for cutting wood panels or the like, which is free from the above-described drawbacks, and which is simple and cost-effective to be implemented.

According to the present invention, a method for cutting wood panels or the like is provided as claimed in the claims from 1 to 3.

The present invention further relates to a machine for cutting wood panels or the like according to the preamble of claim 4. Such a machine is also known from WO2008/038133 A.

According to the present invention, a machine for cutting wood panels or the like is provided as claimed in claims 4 and 5.

The present invention will now be described with reference to the accompanying drawings, which illustrate a non-limitative embodiment thereof, in which:
figure 1 is a diagrammatic plan view of a preferred embodiment of the cutting machine of the present invention;
figure 2 is a diagrammatic side view, with parts removed for clarity, of a first detail of the machine in figure 1;
figure 3 is a diagrammatic front view, with parts removed for clarity, of a second detail of the machine in figure 1;
figure 4 is a diagrammatic front view, with parts removed for clarity, of a first variant of the detail in figure 3;
figure 5 is a diagrammatic front view, with parts removed for clarity, of a second variant of the detail in figure 3;
figure 6 is a diagrammatic front view, with parts removed for clarity, of a third variant of the detail in figure 3; and
figure 7 is a diagrammatic side view, with parts removed for clarity, of a detail in figure 6.

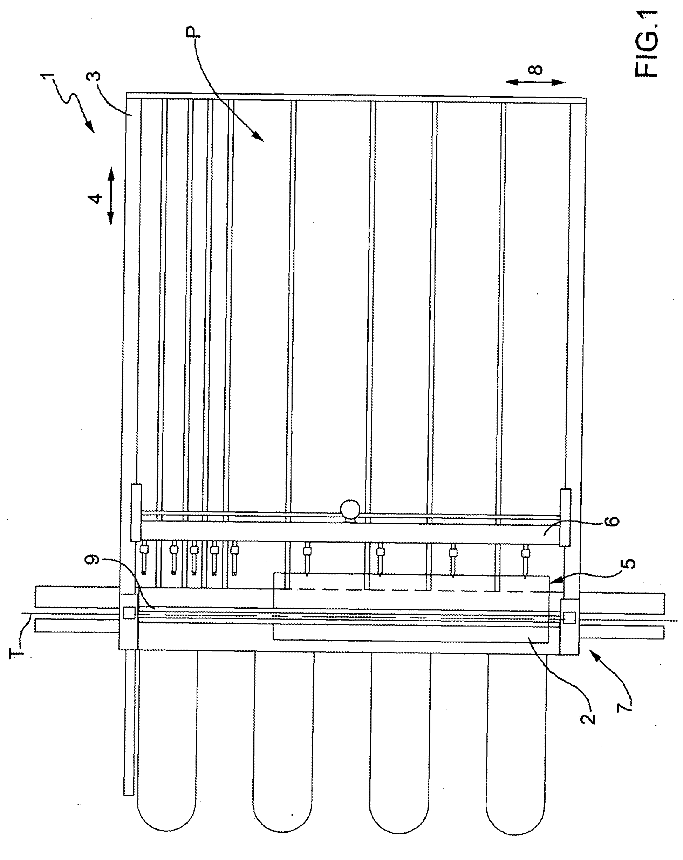

With reference to figure 1, numeral 1 indicates as a whole a cutting machine for cutting panels 2 made of wood or the like, having a substantially parallelepiped shape with a substantially rectangular section.

Machine 1 comprises an elongated base 3, which extends in a horizontal direction 4, defines a substantially horizontal resting plane P for a pack 5 of overlaying panels 2, and cooperates with a feeding device 6 of known type adapted to feed the pack 5 of panels 2 along the base 3 in direction 4. The pack 5 of panels 2 is fed by the device 6 through a cutting station 7 provided with a cutting assembly of known type and not shown, movable in a horizontal direction 8 and transversal to the direction 4 and along a cutting plane T substantially orthogonal to the direction 4 itself for cutting the panels 2.

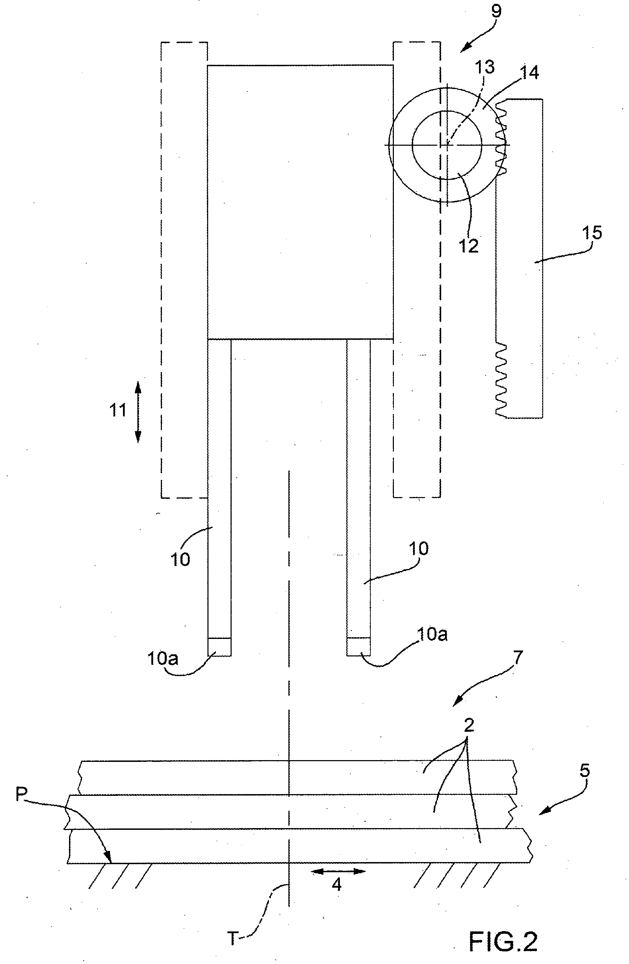

As shown in figure 2, the panels 2 at station 7 are blocked against the plane P by means of a pressure device 9, comprising a pair of pressure bars 10, which extend over the plane P in direction 8, are arranged on opposite sides of the plane T in direction 4, are each provided with a respective strip 10a of elastically deformable material fixed to a lower face of the corresponding bar 10, and are slidingly coupled to the base 3 for performing rectilinear movements in a vertical direction 11 orthogonal to directions 4 and 8 with respect to the base 3 itself.

The bars 10 support a torsion bar 12, which extends over the base 3 in direction 8, is pivotally coupled to the bars 10 to rotate, with respect to the bars 10, about a longitudinal axis 13 thereof, and carries two sprockets 14 keyed to the end thereof, which sprockets are mounted to the bar 12 coaxially to the axis 13, each meshing with a respective rack 15 fixed to the base 3 parallel to direction 11.

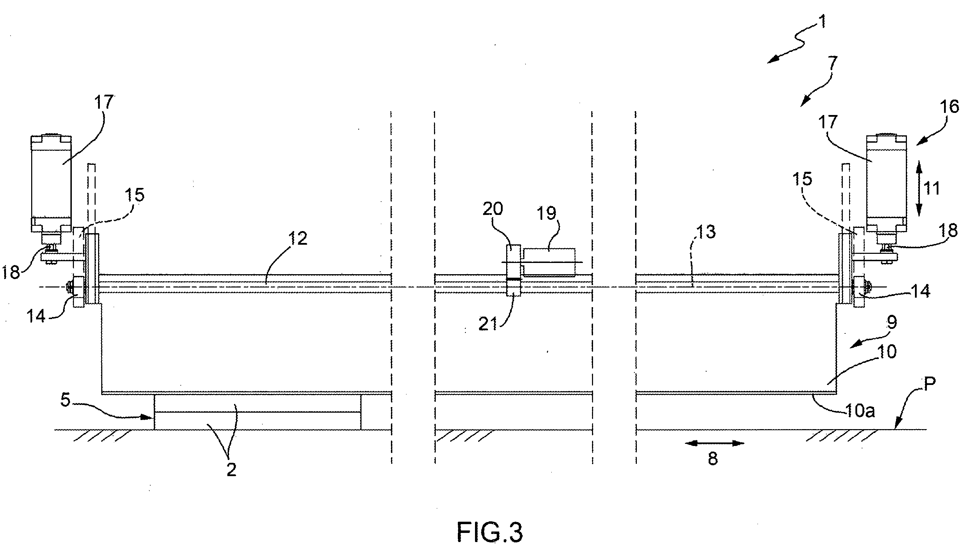

With reference to figure 3, device 9 is movable in direction 11 under the bias of a driving device 16 comprising two pneumatic-type driving cylinders 17, which are fixed to the base parallel to direction 11, are arranged on opposite sides of the base 3 in direction 8, and have respective outlet rods 18 connected to the bars 10, and an electric motor 19, which is fixed to the bars 10, extends in direction 8, and rotates the bars 12 by means of a pair of gears 20, 21, the gear 20 of which is keyed onto an outlet shaft of the motor 19 and the gear 21 is keyed onto the bar 12.

In use, each cylinder 17 is activated to exert an upward push on the device 9, in this case which is substantially equal to half the weight of the device 9, and at the same time the motor 19 is activated to rotate the bar 12 and thus the sprockets 14 about the axis 13, while moving the sprockets 14 along the racks 15 and moving the device 9 in direction 11, between a lowered clamping position of the panels 2 against the plane P (figure 3) and a lifted releasing position (figure 2).

As regards the above description, it is worth noting that:
the lowered clamping position of device 9, and thus the clamping pressure exerted by the bars 10 on the panels 2 are selectively controlled by an encoder of known type (not shown) mounted to the bar 12 or to the motor 19; and
if the motor 19 is not supplied with power, the cylinders 17 control the lifting of device 9.

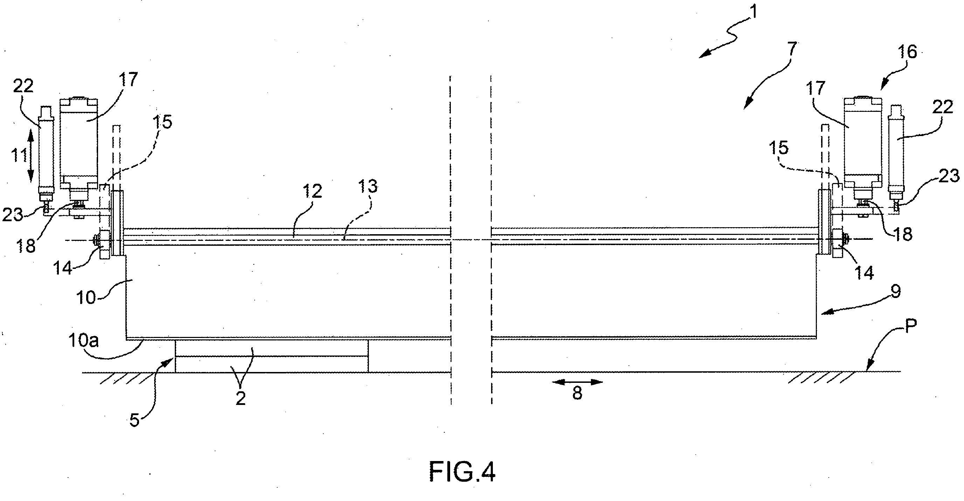

The variant shown in figure 4 differs from that shown in figure 3, in that the electric motor 19 and the gears 20 and 21 are suppressed therein and replaced by two pneumatic-type driving cylinders 22, which are fixed to the base 3 parallel to direction 11, are arranged on opposite sides of the base 3 in direction 8, and have respective outlet rods 23 connected to the bars 10.

In use, device 9 is moved by the cylinders 17 between a lifted releasing position (figure 2) and an intermediate position (not shown), in which the bars 10 are arranged at a predetermined distance from the panels 2, and is moved by the cylinders 22 between the intermediate position (not shown) and the lowered clamping position (figure 4).

As regards the above description, it is worth noting that:
when moving device 9 between the intermediate position and the lowered clamping position thereof, each cylinder 17 is activated to exert an upward push on the device 9, which push is substantially equal to half the weight of the device 9 itself, in this case;
the intermediate position of device 9 is selectively controlled by means of an encoder of known type and not shown as mounted on bar 12;
the cylinders 22 are dimensioned to ensure a correct pressure of the bars 10 on the panels 2; and
the lifting of the device 9 in case of emergency is controlled by the cylinders 17.

According to further operating modes, in the case of the variant shown in figure 3, device 9 may be moved by the cylinders 17 between the lifted releasing position and the intermediate position thereof, while the motor 19 is deactivated, and it may be moved by the motor 19 between the intermediate position and the lowered clamping position thereof while the cylinders 17 are activated to compensate for the weight of the device 9 itself; whereas, in the case of the variant shown in figure 4, device 9 may be moved by the cylinders 22 between the lifted releasing position and the lowered clamping position thereof, while the cylinders 17 are activated to compensate for the weight of the device 9 itself.

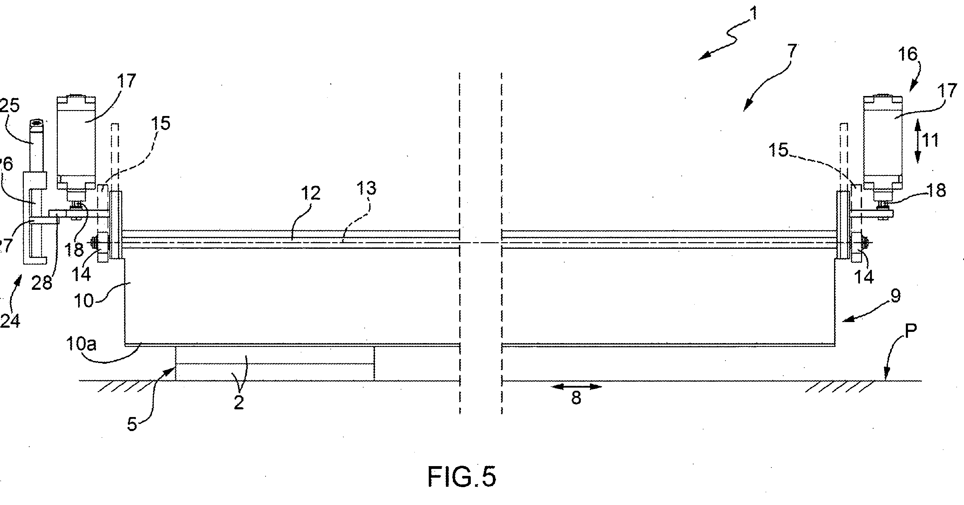

The variant shown in figure 5 differs from that shown in figure 3 due to the electric motor 19 and the gears 20 and 21 being suppressed and replaced, in this case, by a stroke-end device 24 comprising an electric motor 25, which is fixed to the base 3, has an outlet shaft 26 parallel to direction 11, and carries a stroke-end element 27 connected thereto, which transversally extends to direction 11, and is coupled to the shaft 26 by means of a worm screw.

In use, the element 27 is positioned along the shaft 26 in direction 11, and the device 9 is moved by the cylinders 17 between its lifted releasing position (figure 2) and its lowered clamping position (figure 5).

As regards the above description, it is worth noting that:
the lowered clamping position is defined by the engagement of a bracket 28 protruding from the bars 10 with the element 27, and is selectively controlled in direction 11 to block the panels 2 against the plane P by means of the elastic deformation of the strips 10a; and
the lifting of device 9 in an emergency event is controlled by the cylinders 17.

According to a variant (not shown), the device 16 may obviously comprise two stroke-end devices, each cooperating with a corresponding cylinder 17.

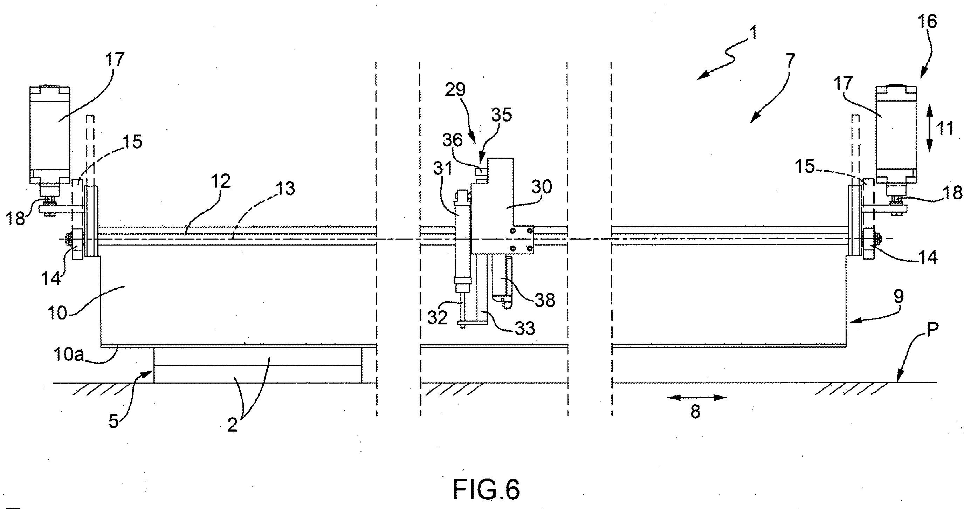

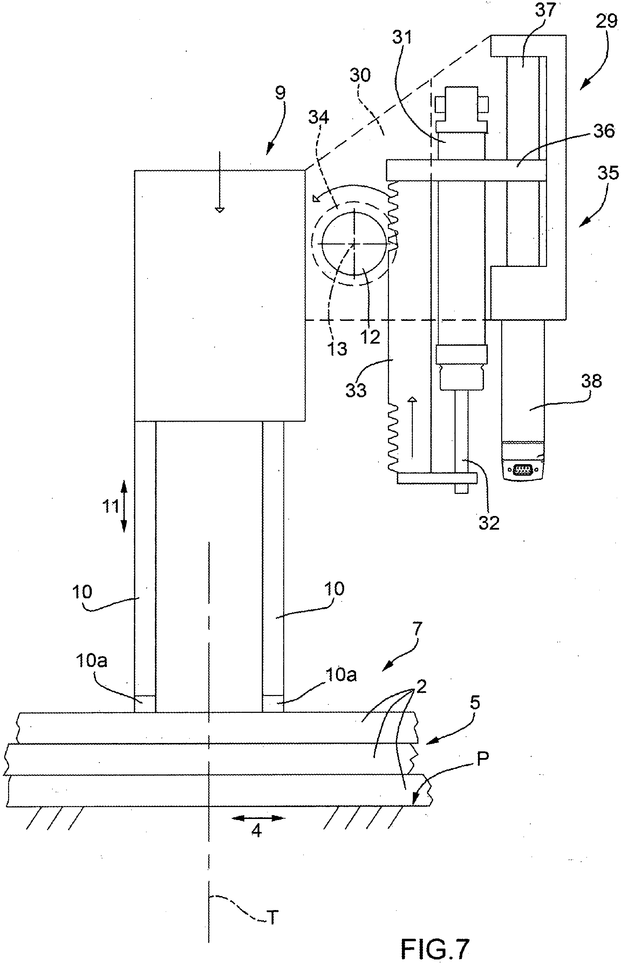

The variant shown in figures 6 and 7 differs from that shown in figure 3 due to the electric motor 19 and the gears 20 and 21 being suppressed and replaced by an operating unit 29 comprising a central supporting plate 30 fixed in an intermediate point of the bars 10; and a pneumatic-type driving cylinder 31, which is fixed to the plate 30 parallel to direction 11, has an outlet rod 32 oriented downwards, and carries a rack 33 connected thereto, which is coupled to the rod 32, extends parallel to direction 11, and is coupled to a gear 34 keyed onto the bar 12.

The unit 29 further comprises a stroke-end device 35 which is fixed to the plate 30, is entirely similar to the stroke-end device 24 and comprises, in turn, a stroke-end element 36 which extends over the rack 33, and is coupled to an outlet shaft 37 of an electric motor 38 by means of a worm screw.

According to a first operating mode, the element 36 is positioned along the shaft 37 in direction 11, the cylinder 31 is deactivated, and the device 9 is moved by the cylinders 17 between its lifted releasing position (figure 2) and its lowered clamping position (figures 6 and 7).

In particular, upon the displacement of the device 9 from the lifted releasing position to the lowered clamping position thereof, the gear 34 rotates counterclockwise in figure 7, thus moving the rack 33 upwards. The lowered clamping position is thus defined by the engagement of the upper end of the rack 33 with the element 36, and is selectively controlled in direction 11 to block the panels 2 against the plane P by means of the elastic deformation of the strips 10a.

According to another operating mode, the element 36 is moved to a lifted position, and the device 9 is moved by the cylinders 17 between the lifted releasing position and the intermediate position thereof, while the cylinder 31 is deactivated and is moved by the cylinder 31 between the intermediate position and the lowered clamping position thereof, while each cylinder 17 is activated for exerting an upward push on device 9, which push is substantially equal to half the weight of the device 9 itself, in this case.

In particular, upon the displacement of device 9 from the lifted releasing position to the intermediate position thereof, the gear 34 rotates counterclockwise in figure 7, thus moving the rack 33 upwards. Once the intermediate position has been reached, the cylinder 31 is activated to move the rack 33 upwards, impart a further rotation motion to the gear 34 (counterclockwise in figure 7), and move the device 9 from the intermediate position to the lowered clamping position thereof.

It is worth noting that in the second operating mode, the device 9 may be stopped in the lowered clamping position thereof by means of the rack 33 engaged with the element 36 or by controlling the operation of the cylinder 31.

Machine 1 has some advantages mainly deriving from that the presence of the driving device 16 allows to control both the clamping pressure exerted by the pressure device 9 on the panels 2 and the lowered clamping position of the pressure device 9 itself, and thus allows to correctly machine the panels 2 made of relatively brittle, delicate materials.

## Claims

1. A method for cutting wood panels (2) or the like, the method comprising the steps of:
feeding at least one panel (2) along a resting plane (P) and through a cutting station (7);
moving a pressure device (9) in a lowered clamping position of the panel (2) against the resting plane (P); and
cutting the panel (2) transversally to a feeding direction (4) of the panel (2) to cut at least one component from the panel (2);
and being **characterized by** further comprising the steps of:
exerting an upward force, equivalent at the maximum to a weight of the pressure device (9), on the pressure device (9) by means of a push device (17) of the pneumatic type;
displacing the pressure device (9) in said lowered clamping position during the action of said force; and
moving the pressure device (9) between the lowered clamping position and a lifted release position by means of a single driving device (19; 22) of the electric or pneumatic type.

2. The method according to claim 1, further comprising the step of:
selectively controlling the displacement of the pressure device (9) from the lifted release position to the lowered clamping position.

3. The method according to claim 1 or 2, further comprising the step of:
moving the pressure device (9) between the lowered clamping position and at least one lifted release position during the action of said force.

4. A machine for cutting wood panels (2) or the like, the machine comprising support means (3) defining a resting plane (P) for at least one panel (2); a cutting station (7); a feeding device (6) for moving the panel (2) along the resting plane (P) and through the cutting station (7); a cutting device mobile along a cutting plane (T) substantially orthogonal to a feeding direction (4) of the panel (2) for cutting at least one component from the panel (2); and a pressure device (9) mobile from and to a lowered clamping position of the panel (2) against the resting plane (P); and being **characterized by** further comprising a push device (17) of the pneumatic type adapted to exert an upward force equivalent at the maximum to a weight of the pressure device (9) on the pressure device (9) itself, and an operating unit (16) adapted to move the pressure device (9) into the lowered clamping position during the action of the push device (17); the operating unit (16) comprising a single driving device (19; 22) of the electric or pneumatic type adapted to move the pressure device (9) between the lowered clamping position and a lifted release position.

5. The machine according to claim 4, further comprising a control device for selectively controlling the movement of the pressure device (9) from the lifted release position to the lowered clamping position.

## Patentansprüche

1. Ein Verfahren zum Schneiden von Holzplatten (2) oder ähnlichem, das Verfahren umfasst die folgenden Schritte:
Zuführen wenigstens einer Platte (2) entlang einer Auflageebene (P) und
durch die Schneidstation (7);
Bewegen einer Druckeinrichtung (9) in eine abgesenkte Klemmposition der Platte (2) gegen die Auflageebene (P); und
Schneiden der Platte (2) quer zu einer Zufuhrrichtung (4) der Platte (2), um wenigstens eine Komponente von der Platte (2) abzutrennen;
und welches **dadurch gekennzeichnet ist, dass** es die folgenden Schritte umfasst:
Ausüben einer Aufwärtskraft, die bei ihrem Maximum äquivalent zu einem Gewicht der Druckeinrichtung (9) ist, auf die Druckeinrichtung (9) mittels einer Drückeinrichtung (17) des pneumatischen Typs;
Versetzen der Druckeinrichtung (9) in die genannte abgesenkte Klemmposition während der Wirkung der genannten Kraft; und
Bewegen der Druckeinrichtung (9) zwischen der abgesenkten Klemmposition und einer angehobenen Löseposition mittels einer einzigen Antriebseinrichtung (19; 22) des elektrischen oder pneumatischen Typs.

2. Das Verfahren gemäß Anspruch 1, ferner umfassend den folgenden Schritt:
selektives Steuern des Versatzes der Druckeinrichtung (9) aus der angehobenen Löseposition in die abgesenkte Klemmposition.

3. Das Verfahren gemäß Anspruch 1 oder 2, ferner umfassend den folgenden Schritt:
Bewegen der Druckeinrichtung (9) zwischen der abgesenkten Klemmposition und wenigstens einer angehobenen Löseposition während der Wirkung der genannten Kraft.

4. Eine Maschine zum Schneiden von Holzplatten (2) oder Ähnlichem, wobei die Maschine ein Tragmittel (3) umfasst, das eine Auflageebene (P) für wenigstens eine Platte (2) bildet; eine Schneidstation (7); eine Zuführeinrichtung (6) zum Bewegen der Platte (2) entlang der Auflageebene (P) und durch die Schneidstation (7); eine Schneideinrichtung mobil entlang einer Schneidebene (T), die im Wesentlichen senkrecht zu einer Zuführrichtung (4) der Platte (2) ist, zum Abtrennen wenigstens einer Komponente von der Platte (2); und eine Druckeinrichtung (9), die mobil aus und in eine abgesenkte Klemmposition der Tafel (2) gegen die Auflageebene (P) ist; wobei die Maschine **dadurch gekennzeichnet ist, dass** sie ferner eine Drückeinrichtung (17) des pneumatischen Typs umfasst, die angepasst ist, um eine Aufwärtskraft auszuüben, die bei ihrem Maximum äquivalent zu einem Gewicht der Druckeinrichtung (9) ist, auf die Druckeinrichtung (9) selbst, und ferner eine Betätigungseinheit (16), die angepasst ist, die Druckeinrichtung (9) in die abgesenkte Klemmposition während des Wirkens der Drückeinrichtung (17) zu bewegen; die Betätigungseinheit (16) umfasst eine einzige Antriebseinrichtung (19; 22) des elektrischen oder pneumatischen Typs, angepasst, um die Druckeinrichtung (9) zwischen der abgesenkten Klemmposition und einer angehobenen Löseposition zu bewegen.

5. Die Maschine gemäß Anspruch 4, ferner umfassend eine Steuereinrichtung zum selektiven Steuern der Bewegung der Druckeinrichtung (9) aus der angehobenen Löseposition in die abgesenkte Klemmposition.

## Revendications

1. Procédé de coupe de panneaux en bois (2) ou similaire, le procédé comprenant les étapes de :
apport d'au moins un panneau (2) le long d'un plan d'appui (P) et à travers un poste de coupe (7) ;
transfert d'un dispositif de pression (9) dans une position de serrage abaissée du panneau (2) contre le plan d'appui (P) ; et
coupe du panneau (2) transversalement à une direction d'apport (4) du panneau (2) pour couper au moins un composant du panneau (2) ;
et **caractérisé en ce qu'**il comprend en outre les étapes de :
exercice d'une force ascendante, équivalente au maximum à un poids du dispositif de pression (9), sur le dispositif de pression (9) au moyen d'un dispositif de poussée (17) du type pneumatique ;
déplacement du dispositif de pression (9) dans ladite position de serrage abaissée pendant l'action de ladite force ; et
transfert du dispositif de pression (9) entre la position de serrage abaissée et une position de dégagement relevée au moyen d'un seul dispositif d'entraînement (19 ; 22) du type électrique ou pneumatique.

2. Procédé selon la revendication 1, comprenant en outre l'étape de :
régulation sélective du déplacement du dispositif de pression (9) de la position de dégagement relevée à la position de serrage abaissée.

3. Procédé selon la revendication 1 ou 2, comprenant en outre l'étape de :
transfert du dispositif de pression (9) entre la position de serrage abaissée et au moins une position de dégagement relevée pendant l'action de ladite force.

4. Machine de coupe de panneaux en bois (2) ou similaire, la machine comprenant un moyen de support (3) définissant un plan d'appui (P) pour au moins un panneau (2) ; un poste de coupe (7) ; un dispositif d'apport (6) pour transférer le panneau (2) le long du plan d'appui (P) et à travers le poste de coupe (7) ; un dispositif de coupe mobile le long d'un plan de coupe (T) sensiblement orthogonal à une direction d'apport (4) du panneau (2) pour couper au moins un composant du panneau (2) ; et un dispositif de pression (9) mobile depuis et vers une position de serrage abaissée du panneau (2) contre le plan d'appui (P) ; et **caractérisée en ce qu'**elle comprend en outre un dispositif de poussée (17) du type pneumatique adapté pour exercer une force ascendante équivalente au maximum à un poids du dispositif de pression (9) sur le dispositif de pression (9) lui-même, et une unité opérationnelle (16) adaptée pour transférer le dispositif de pression (9) dans la position de serrage abaissée pendant l'action du dispositif de poussée (17) ; l'unité opérationnelle (16) comprenant un seul dispositif d'entraînement (19 ; 22) du type électrique ou pneumatique adapté pour transférer le dispositif de pression (9) entre la position de serrage abaissée et une position de dégagement relevée.

5. Machine selon la revendication 4, comprenant en outre un dispositif de régulation pour réguler sélectivement le transfert du dispositif de pression (9) de la position de dégagement relevée à la position de serrage abaissée.
